# FASCICULE DE BREVET EUROPEEN

(11) **EP 0 411 603 B1**
(45) Date de publication et mention de la délivrance du brevet: **26.10.1994**
(21) Numéro de dépôt: 90114758.7
(22) Date de dépôt: 01.08.1990
(51) Int. Cl.: A47J 19/02

(54) **Centrifugeuse**
Saftzentrifuge
Centrifugal juice extractor

(30) Priorité: 04.08.1989 FR 8910562
(43) Date de publication de la demande: 06.02.1991
(73) Titulaire: MOULINEX, F-93170 Bagnolet (FR)
(72) Inventeur: Basora Sanjuan, Antonio, E-08201 Barcelone (ES)
(74) Mandataire: May, Hans Ulrich, Dr.

(56) Documents cités:
- CH-A- 412 226
- DE-A- 2 338 504
- DE-B- 1 093 961

## Description

L'invention se rapporte aux centrifugeuses à usage domestique, utilisées pour extraire le jus des fruits, des légumes ou analogues.

L'invention se rapporte, plus particulièrement, à une centrifugeuse comportant une cuve destinée à recevoir le jus de centrifugation et dans laquelle vient se loger un panier comprenant un tamis perforé et une bague inférieure qui est adaptée à venir s'accoupler en rotation avec un entraîneur solidaire d'un arbre moteur et qui comporte une jupe s'étendant vers le bas et vers l'extérieur, la cuve formant dans sa partie inférieure une rigole limitée vers l'entraîneur par une collerette circulaire s'étendant vers le haut entre l'entraîneur et la jupe.

Dans une telle centrifugeuse, connue d'après le document DE-A-2 338 504, la collerette circulaire a pour rôle d'empêcher le jus d'atteindre le moteur en passant sous l'entraîneur et à travers l'ouverture de passage de l'arbre pratiquée dans le socle supportant la cuve, et ainsi de protéger le moteur. Néanmoins, cette collerette n'est pas toujours aussi efficace qu'il serait souhaitable. En effet, lors de la rotation à grande vitesse du panier, le jus a tendance à être aspiré le long de la collerette et il peut se produire des débordements, causant au moteur de grands dommages. Il est de plus très difficile et onéreux d'adapter un joint d'étanchéité au niveau de l'ouverture à cause des grandes vitesses de rotation (environ 12 000 tours/mn).

Le document DE-B-1 093 961 décrit une centrifugeuse comportant, dans une cuve, un tamis perforé relié en rotation à un entraîneur solidaire d'un arbre moteur par un disque présentant des ailettes courbées vers le haut. Lors de la rotation du tamis, les ailettes créent un courant d'air dirigé radialement au travers des trous du tamis pour séparer le jus du marc, et dirigent le jus dans une rigole limitée dans le fond de la cuve par une collerette circulaire s'étendant autour de l'entraîneur en vue d'évacuer le jus par une sortie. Toutefois, le courant d'air créé contribue à provoquer au niveau de la rigole une surpression qui favorise le phénomène d'aspiration du moteur et donc l'entraînement du jus au-dessus de la collerette, causant au moteur de grands dommages.

Par ailleurs, il est connu du document CH-A-412 226 une centrifugeuse comportant des chicanes agencées entre la jupe du panier et le fond de la cuve. Ces chicanes retiennent bien la pulpe mais laissent passer le jus qui est entraîné par la forte dépression provoquée par les pièces rotatives du moteur, de sorte que le moteur risque de subir de graves dommages.

La présente invention a pour but de remédier à cet inconvénient et a pour objet de réaliser une centrifugeuse du type exposé ci-dessus dans laquelle tout débordement du jus de centrifugation par dessus la collerette est empêché afin de protéger le moteur.

Selon l'invention, la jupe du panier comporte sur sa paroi inférieure des moyens dynamiques destinés à créer, pendant la rotation du panier, un courant d'air dirigé vers le bas et vers la périphérie de la cuve, de manière à éloigner le jus de la collerette et à le retenir dans la rigole.

La présente invention a donc pour avantage d'utiliser la réaction de l'air sur les moyens dynamiques entraînés à grande vitesse pour créer, lors de la rotation du panier, un courant d'air qui chasse le jus de la région de la collerette et retient le jus dans le fond de la rigole.

Les caractéristiques et avantages de l'invention ressortiront d'ailleurs de la description qui va suivre, à titre d'exemple, en référence au dessin annexé dans lequel:

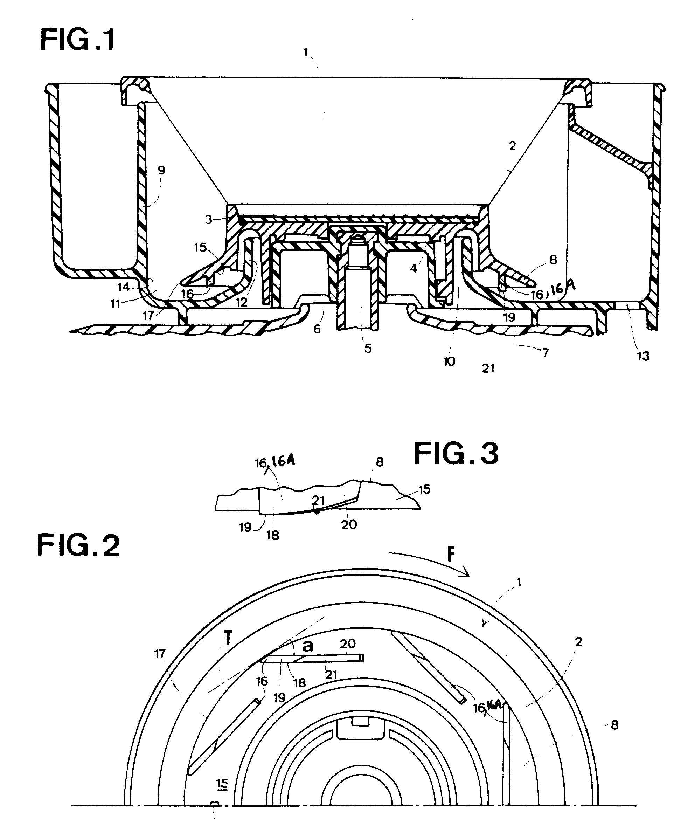

la figure 1 est une vue en coupe verticale partielle d'une centrifugeuse selon l'invention ; la figure 2 est une vue partielle du dessous du panier de la centrifugeuse ; la figure 3 est une vue partielle en élévation d'un moyen dynamique constitué par une ailette.

La centrifugeuse représentée à la figure 1 comporte un panier 1 comprenant un tamis perforé 2 et une bague inférieure 3 qui est adaptée à venir s'accoupler en rotation avec un entraîneur 4 solidaire d'un arbre moteur 5 qui traverse une ouverture de passage 6 pratiquée dans un socle 7 contenant un moteur (non représenté). La bague inférieure 3 du panier 1 comporte une jupe 8 s'étendant vers le bas et vers l'extérieur. Le panier vient se loger dans une cuve 9 destinée à recevoir le jus de centrifugation. La cuve 9 est supportée de façon amovible par le socle 7 et comporte une ouverture 10 de passage de l'entraîneur 4. La cuve 9 forme dans sa partie inférieure une rigole 11 limitée vers l'entraîneur 4 par une collerette circulaire 12 s'étendant vers le haut entre l'entraîneur 4 et la jupe 8. Un débouché 13 d'évacuation du jus est pratiqué dans le fond de la rigole 11 au voisinage de la périphérie 14 de la cuve 9. Selon l'invention, la jupe 8 du panier 1 comporte sur sa paroi inférieure 15 des moyens dynamiques 16A destinés à créer, pendant la rotation du panier 1, un courant d'air dirigé vers le bas et vers la périphérie 14 de la cuve 9, de manière à retenir le jus dans la rigole 11. Ces moyens dynamiques 16 sont avantageusement constitués par une série d'ailettes dirigées vers le bas, s'étendant chacune dans un plan vertical du voisinage de la périphérie 17 de la jupe 8 vers l'entraîneur 4 et orientée dans le sens de rotation F selon un angle aigu a déterminé par rapport à la tangente T à la périphérie 17.
Ainsi lors de la rotation à grande vitesse du panier 1, la réaction de l'air sur les ailettes (16) crée un courant d'air qui chasse le liquide de la région de la collerette 12 où il a tendance à être aspiré et qui retient donc le jus dans le fond de la rigole 11. Les débordements par dessus la collerette 12 sont donc rendus impossibles.

Ainsi que représenté à la figure 2, l'angle a déterminé par chaque ailette 16 avec la tangente T à la périphérie 17 de la jupe 8 est compris entre 30 et 40 degrés et de préférence sensiblement égal à 35 degrés.

Comme on le voit en particulier sur les figures 2 et 3, chaque ailette 16 est composée de deux parties contiguës, une première partie 18 adjacente à la périphérie 17 de la jupe 8, qui présente un bord inférieur 19 sensiblement horizontal, et une deuxième partie 20 éloignée de la périphérie 17, qui présente un bord inférieur 21 chanfreiné dont l'inclinaison est tournée à la fois vers l'entraîneur 4 et vers la première partie 18.

Cette disposition permet d'augmenter le courant d'air produit pendant la rotation.

En fonctionnement, l'entraîneur 4 solidaire de l'arbre moteur 5 entraîne en rotation à grande vitesse le panier 1 contenant des fruits ou analogues. Par la force centrifuge, le jus traverse le tamis perforé 2 et tombe dans la rigole 11 de la cuve 9. Le jus a tendance à être aspiré le long de la collerette 12 puis le long de l'arbre moteur 5 par effet de succion créé par les pièces rotatives du moteur. Le courant d'air produit par les ailettes 16 s'oppose à cette aspiration et chasse le jus de la région de la collerette 12 et le retient dans le fond de la rigole 11 vers la périphérie 14 de la cuve 9, évitant ainsi que le jus ne déborde la collerette 12. En outre, l'écoulement du jus par le débouché 13 est favorisé.

## Revendications

1. Centrifugeuse comportant une cuve (9) destinée à recevoir le jus de centrifugation et dans laquelle vient se loger un panier (1) comprenant un tamis perforé (2) et une bague inférieure (3) qui est adaptée à venir s'accoupler en rotation avec un entraîneur (4) solidaire d'un arbre moteur (5) et qui comporte une jupe (8) s'étendant vers le bas et vers l'extérieur, la cuve (9) formant dans sa partie inférieure une rigole (11) limitée vers l'entraîneur (4) par une collerette circulaire (12) s'étendant vers le haut entre l'entraîneur (4) et la jupe (8),
**caractérisée en ce que** la jupe (8) du panier (1) comporte sur sa paroi inférieure (15) des moyens dynamiques (16A) destinés à créer, pendant la rotation du panier (1), un courant d'air dirigé vers le bas et vers la périphérie (14) de la cuve (9), de manière à éloigner le jus de la collerette (12) et à le retenir dans la rigole (11).

2. Centrifugeuse selon la revendication 1,
**caractérisée en ce que** les moyens dynamiques (16A) sont constitués par une série d'ailettes (16) dirigées vers le bas, s'étendant chacune du voisinage de la périphérie (17) de la jupe (8) vers l'entraîneur (4) et orientée dans le sens de rotation (F) selon un angle aigu (a) déterminé par rapport à la tangente (T) à la périphérie (17).

3. Centrifugeuse selon la revendication 1 ou 2,
**caractérisée en ce que** chaque ailette (16) s'étend dans un plan vertical.

4. Centrifugeuse selon l'une quelconque des revendications précédentes,
**caractérisée en ce que** l'angle (a) déterminé par chaque ailette (16) avec la tangente (T) à la périphérie (17) de la jupe (8) est compris entre 30 et 40 degrés.

5. Centrifugeuse selon l'une quelconque des revendications précédentes,
**caractérisée en ce que** chaque ailette (16) est composée de deux parties, une première partie (18) adjacente à la périphérie (17) de la jupe (8), qui présente un bord inférieur (19) sensiblement horizontal, et une deuxième partie (20) éloignée de la périphérie (17), qui présente un bord inférieur (21) chanfreiné dont l'inclinaison est tournée à la fois vers l'entraîneur (4) et vers la première partie (18).

## Claims

1. Centrifuge having a tank (9) intended to receive the centrifugation juice and in which is housed a cage (1) comprising a perforated sieve (2) and a bottom ring (3) which is suitable for being coupled in rotation to a driving device (4) fixed to a drive shaft (5) and which has a skirt (8) extending downwards and outwards, the tank (9) forming, in its lower part, a channel (11) delimited in the direction of the driving device (4) by a circular collar (12) extending upwards between the driving device (4) and the skirt (8), characterised in that the skirt (8) of the cage (1) has on its lower wall (15) dynamic means (16A) intended to create, during the rotation of the cage (1), a draught of air directed downwards and towards the periphery (14) of the tank (9), so as to move the juice away from the collar (12) and retain it in the channel (11).

2. Centrifuge according to Claim 1, characterised in that the dynamic means (16A) consist of a series of blades (16) directed downwards, each extending from near the periphery (17) of the skirt (8) towards the driving device (4) and oriented in the direction of rotation (F) at an acute angle (a) determined with respect to the tangent (T) to the periphery (17).

3. Centrifuge according to Claim 1 or 2, characterised in that each blade (16) extends in a vertical plane.

4. Centrifuge according to any one of the preceding claims, characterised in that the angle (a) determined by each blade (16) with the tangent (T) to the periphery (17) of the skirt (8) is between 30 and 40 degrees.

5. Centrifuge according to any one of the preceding claims, characterised in that each blade (16) consists of two parts, a first part (18) adjacent to the periphery (17) of the skirt (8), which has a substantially horizontal bottom edge (19), and a second part (20) remote from the periphery (17) and which has a bevelled lower edge (21), the inclined part of which is turned both towards the driving device (4) and towards the first part (18).

## Patentansprüche

1. Zentrifuge mit einer Schüssel (9), die dazu bestimmt ist, den zentrifugierten Saft aufzunehmen und in welcher ein Korb (1) sitzt, der ein perforiertes Sieb (2) und einen unteren Ring (3) aufweist, der für eine drehfeste Kupplung mit einem Mitnehmer (4) ausgelegt ist, welcher mit einer Motorwelle (5) einstückig ist und eine Schürze (8) aufweist, die sich nach unten und nach außen hin erstreckt, wobei die Schürze (9) in ihrem unteren Teil eine Rinne (11) bildet, die zu dem Mitnehmer (4) hin durch einen kreisförmigen Kragen (12) begrenzt ist, der sich zwischen dem Mitnehmer (4) und der Schürze (8) nach oben hin erstreckt, **dadurch gekennzeichnet, daß** die Schürze (8) des Korbs (1) an ihrer unteren Wandung (15) dynamische Einrichtungen (16A) aufweist, die dazu bestimmt sind, während der Drehung des Korbs (1) einen nach unten und zu dem Rand (14) der Schlüssel (9) hin gerichteten Luftstrom zu erzeugen, so daß der Saft von dem Kragen (12) entfernt und in der Rinne (11) gehalten wird.

2. Zentrifuge nach Anspruch 1, **dadurch gekennzeichnet, daß** die dynamischen Einrichtungen (16A) aus einer Reihe nach unten gerichteter Flügel (16) gebildet sind, welche sich jeweils von der Umgebung des Rands (17) der Schürze (8) zu dem Mitnehmer (4) erstrecken und in der Drehrichtung (F) unter einem spitzen Winkel (a) ausgerichtet sind, der bezüglich der Tangente (T) an den Rand (17) bestimmt ist.

3. Zentrifuge nach Anspruch 1 oder 2, **dadurch gekennzeichnet, daß** der durch jeden Flügel (16) in einer vertikalen Ebene erstreckt.

4. Zentrifuge nach einem der vohergehenden Ansprüche, **dadurch gekennzeichnet, daß** der durch jeden Flügel (16) mit der Tangente (T) zu dem Rand (17) der Schürze (8) bestimmte Winkel (a) zwischen 30° und 40° liegt.

5. Zentrifuge nach einem der vorhergehenden Ansprüche, **dadurch gekennzeichnet, daß** jeder Flügel (16) aus zwei Teilen besteht, und zwar einem neben dem Rand (17) der Schürze (8) liegenden ersten Teil (18), der einen im wesentlichen horizontalen unteren Rand (19) bildet, und einem von dem Rand (17) entfernten zweiten Teil (20), der einen abgeschrägten unteren Rand (21) bildet, dessen Neigung gleichzeitig zu dem Mitnehmer (4) und zu dem ersten Teil (18) hin gedreht ist.
